# EUROPEAN PATENT SPECIFICATION

(11) **EP 2 581 317 B1**
(45) Date of publication and mention of the grant of the patent: **03.12.2014**
(21) Application number: 12188418.3
(22) Date of filing: 12.10.2012
(51) Int. Cl.: B65D 1/20, B29C 49/54

(54) **Container and method of forming same**
Behälter und Verfahren zu deren Formung
Récipient et procédé de formation de celui-ci

(30) Priority: 13.10.2011 GB 201117754
(43) Date of publication of application: 17.04.2013
(73) Proprietor: RPC Containers Limited, Rushden Northamptonshire NN106FB (GB)
(72) Inventor: Dale, James Patrick, Northamptonshire NN10 8RP (GB); Neath, John, Northamptonshire NN10 8RP (GB); Morris, Roger, Northamptonshire NN10 8RP (GB)
(74) Representative: Stevens, Jason Paul

(56) References cited:
- EP-A1- 1 334 915
- WO-A1-2007/048173
- FR-A1- 2 747 648

## Description

The present invention is concerned with a container for liquids, and more particularly to a container which is less liable to "glugging".

In order to remove liquid from a container, it is normally necessary to pour the liquid out. When liquid is poured out smoothly, there is a space between the free surface of the liquid being poured and the top of the mouth of the container, and air can pass through this space into the body of the container.

However, if the container is tipped too far, the mouth of the container can become completely blocked by the liquid being poured out, and air then cannot enter the container to take its place. This can lead to "glugging", where the liquid does not flow out smoothly, but instead flows out in spurts, in between which air enters the container. Glugging makes it practically impossible to pour the liquid smoothly, leading to spillage, which is particularly disadvantageous if the liquid is valuable or harmful.

A common form of liquid container, particularly for the industrial supply of liquids, is made of plastic material and formed by a blow moulding process. Two female mould halves are brought together round a malleable tube of material (a parison), and the container is formed by inflating the parison with compressed air so that the outer surface of the tube takes the shape of the mould. A mouth is formed at the end of a neck which projects upwardly from the container.

Various forms of container and container mouth have been proposed to deal with the problem of glugging. In one solution, a vent aperture is provided at the opposite end of the container to the mouth so that air can enter freely. In another form, the neck has a wider section of rectangular cross-section below the mouth, and a hollow handle formed on the upper surface of the container is connected to this wider section. During pouring, air flows into the neck, into the wider annular section, and through the hollow handle into the body of the container. The hollow handle is usually raised up from the upper surface of the container, so that the moulded container can be removed from the mould without damaging the wider section.

A further attempt to overcome these difficulties is proposed in WO 2007/048173. Here, an insert is provided in the mouth of a hollow-handled container, which separates the air flowing in from the liquid flowing out. Specifically, the insert divides the mouth into a central passage for the liquid, and an outer annular passage for the air. The annular passage communicates with the annular section and the hollow handle, allowing air to flow into the container to replace the liquid.

The insert is fitted into the container neck, and is retained by a restriction in the neck below the annular chamber. This fit is such that the insert becomes an integral part of the neck and this provides complete separation of the air and liquid, ensuring that at no time the liquid will close off the air passage into the neck.

This technique works easily with small containers that are standalone and do not require to be stacked, where there are no undercuts to trap the moulding in the mould.

However, large industrial containers need to be stacked, and in order to achieve this they are designed so that the handle and neck are recessed into the top of the container, and the base of the container is contoured to provide a mating surface. The top outer face extends forward either side of the neck so that it provides a stable platform, and in order to release the container from the mould, the mould is constructed so that the part which forms the top section can move in a vertical plane at the same time as the mould opens laterally. This movement must be synchronised so that all of the mould parts move together at a rate that allows the part that forms the indented section to clear the moulding without damaging the surfaces in the recess.

The insert described in WO 2007/048173 is shown as being fitted into a simple freestanding container with a small neck. The neck projects upwardly from the container, and is formed with a collar of generally rectangular cross-section projecting from the neck, which communicates with the handle. The container can be moulded using a simple two-part mould, which opens laterally without any need for vertical movements.

However, if this system were to be used on an industrial container with a larger and taller neck, recessed into the top of the container, then the recess would need to be deeper than normal. In turn, this would prevent the use of a rectangular collar to connect to the handle to vent air, as it would not be possible to extract the moulded container with such a collar from the mould.

Furthermore, large stackable industrial containers are widely used for the storage and carriage of hazardous liquids, and this is highly regulated, with strict requirements for testing and certification of the containers. Certification must be obtained before the containers can be offered for sale, and one of the tests involves a container filled with an anti-freeze solution being dropped at an angle onto its neck from heights varying between 1.0 and 1.9 metres, at a temperature of -20 °C. The exact height used for the test is varied depending on the specific gravity and the degree of hazard of the intended contents of the container.
A prior art container, which has the features of the preamble of appended claim 1, is disclosed in EP 1 334 915

At least in its preferred embodiments, the invention provides a container for liquids with an anti-glug feature, which can be successfully extracted from a mould after moulding, and with an improved performance in drop tests.

According to a first aspect of the present invention, there is provided a container for liquids, comprising side walls, front and rear walls, a base, and an upper wall; wherein the upper wall includes a recess with recess side walls and a recess rear wall, the recess side walls being formed at an angle to the container side walls, and a generally cylindrical neck projects upwardly from the front of the recess; wherein the neck is provided with a wider section near the base of the recess, shaped such that it is wider at its top part than at its bottom part, characterised in that said wider section extends around the neck as a body of revolution, which allows the neck to deform resiliently when subjected to shock loads.

The wider section is wider at its top than its bottom, and thus has a tapered shape. Further, this taper is in the same direction as the slope of the recess side walls, and thus a single mould part can be used in a blow-moulding process to form the recess side wall and the wider section, and can be withdrawn from the moulded container without damaging it.

Furthermore, by providing the wider section as a body of revolution, wider at its top than its bottom, improved resistance to shock loads (such as those encountered when the container is dropped onto its neck) can be achieved.

In a container with a conventional neck, failure typically occurs where the neck joins the body of the container. There is little or no resilience here to absorb the impact, and the neck is forced into the upper face of the container, causing it to fail.

In contrast, in the container of the present invention, the neck is formed with a generally conical section, wider at the top than at the bottom. It is believed that the conical section acts in a manner similar to a Belleville washer, allowing resilient deformation of the neck under shock loads.

In a preferred form, the wider section has a cross-section which is in the general form of a right-angled triangle, the hypotenuse of the right-angled triangle extending at substantially the same angle to the container side wall as the recess side wall does.

Forming the recess side wall and the hypotenuse of the right-angled triangle at substantially the same angle means that they extend generally parallel to each other, and so it is possible to form both of these surfaces in a blow-moulding process using a single, parallel-sided mould part, which can then be withdrawn from the moulded container at the same angle. This further reduces the risk of damage to the container when the mould part is removed, and improves the reliability of the moulding process.

Preferably, the area at the front of the recess from which the neck projects upwardly is located rearwardly from the front of the recess, so that the frontmost part of the wider section is located rearward of the front wall and does not project beyond the front wall. With this arrangement, no part of the neck projects beyond the footprint of the container, which allows the containers to be placed next to each while avoiding interference between adjacent containers.

Preferably, the neck consists of the wider section and a threaded section extending upwardly from the wider section, for receiving a cap.

With this arrangement, the wider section of the neck is connected directly to the base of the recess. This further improves resilience and impact resistance.

In a preferred form, an insert is provided in the neck, to divide the neck into a central passage for liquid and an outer passage for air, the outer passage being in communication with the wider section. This insert further reduces the incidence of glugging when liquid is poured from the container, and in addition provides additional reinforcement to the area where the neck joins the container.

The invention also extends to a method of forming such a container.

A preferred embodiment of the invention will now be described by way of example only and with reference to the accompanying drawings, in which:
Figure 1 is a front perspective view of a container according to the invention;
Figure 2 is a rear perspective view of the container;
Figure 3 is a front view of the container;
Figure 4 is a side view of the container;
Figure 5 is a schematic view of the top part of the container and a mould part;

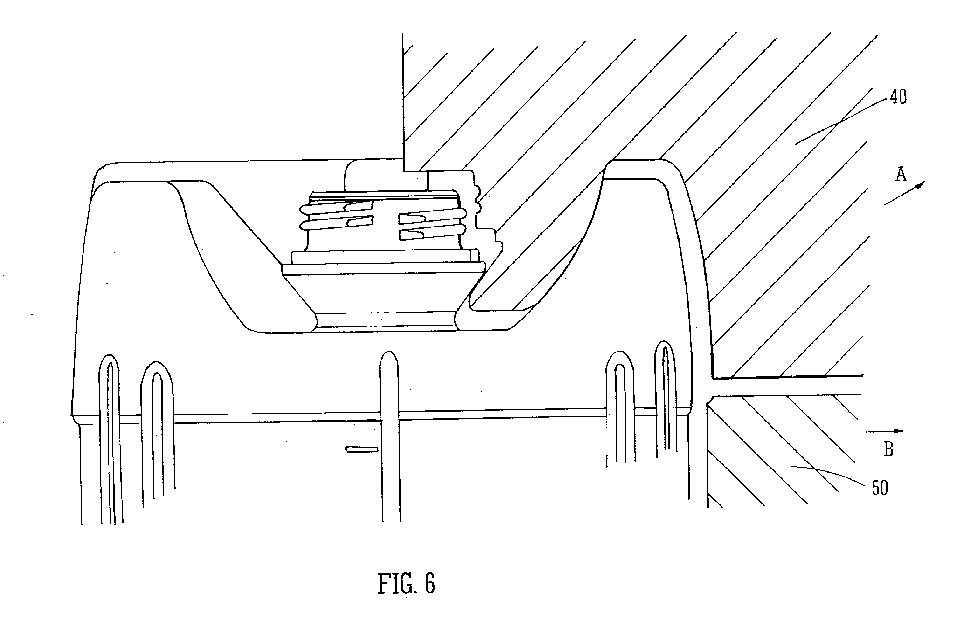

Figure 6 is a view similar to Figure 5, but with the mould part slightly withdrawn from the container;
Figure 7 is a view similar to Figures 5 and 6, but with the mould part completely withdrawn from the container;
Figure 8 is a perspective view of part of the top of the container, showing an insert positioned in the neck of the container; and
Figure 9 is a cross-sectional view of the top of the container, showing the insert located in the neck.

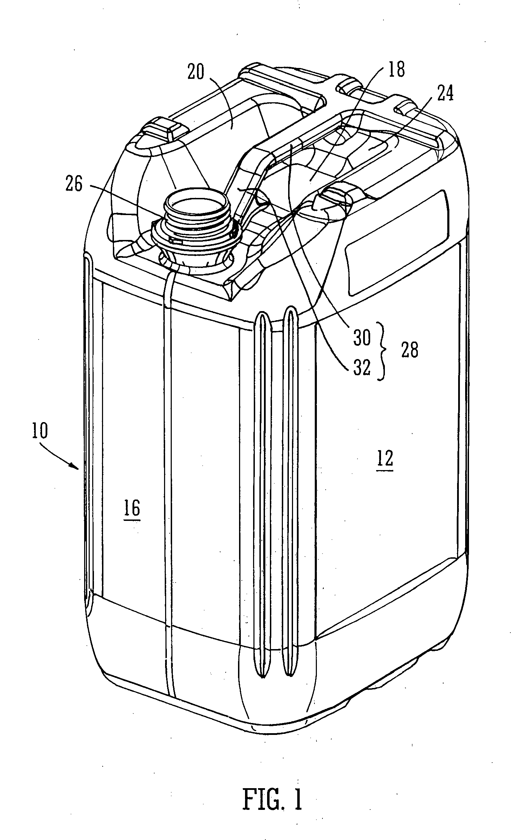

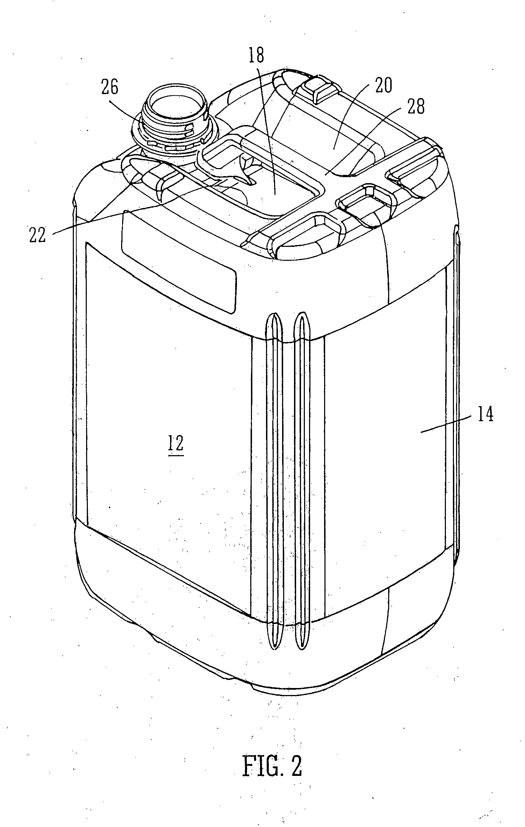

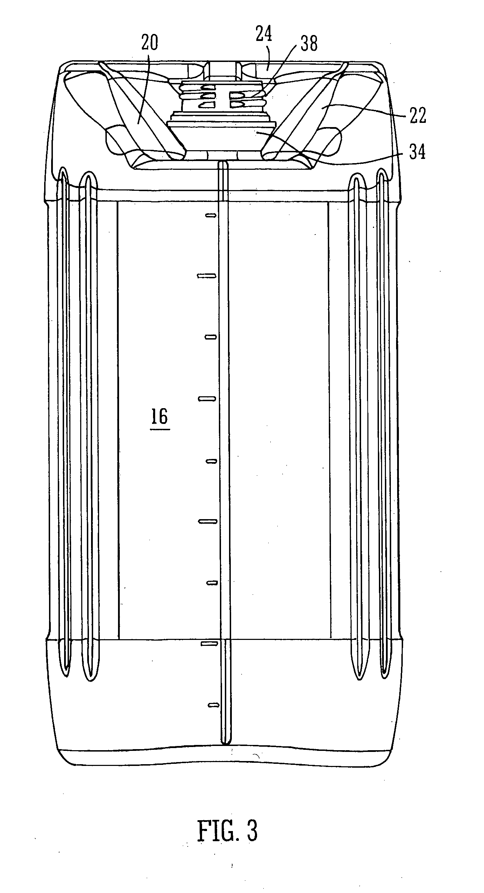

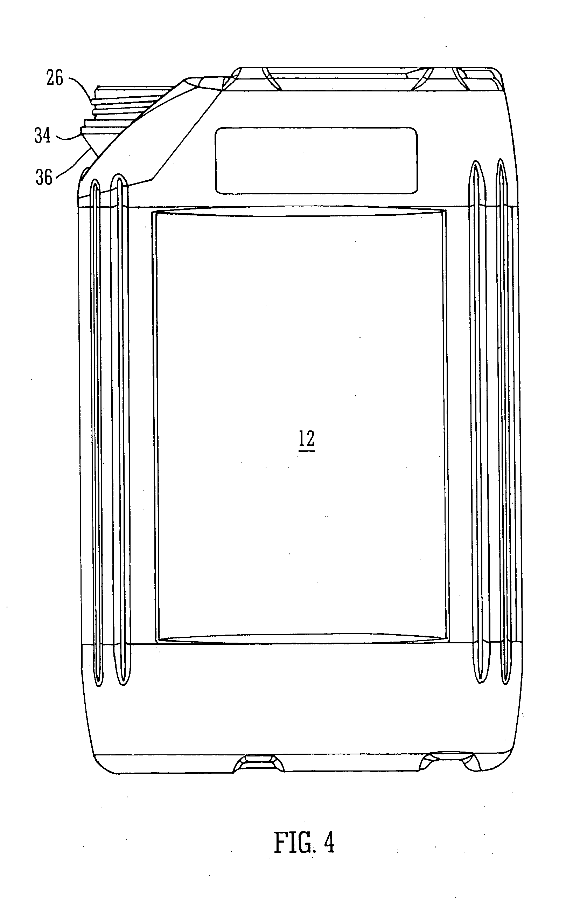

As can be seen from Figures 1 to 4, the container 10 is generally parallelepipedal, in that it has side walls 12, a rear wall 14, a front wall 16, and a base (not visible in the drawings), all of which are generally planar. It also has an upper wall 18.

The upper wall is formed with a recess, bounded at the sides by recess side walls 20, 22 and at the rear by a recess rear wall 24. Projecting upwardly from the front of the recess is a neck 26 which terminates in a mouth. A hollow handle 28 extends along the top of the recess, and includes a first portion 30 which extends forwardly from the recess rear wall 24, and a second portion 32 which extends forwardly and downwardly and connects with the neck 26. The upper surface of the handle 28 is generally level with the upper surface of the walls of the container 12, 14, 16 and the walls 20, 22, 24 of the recess.

The recess rear wall 24 can be generally vertical; however, the recess side walls 20, 22 are formed at an angle to the vertical. This angle allows the mould parts which form the upper section of the container to be withdrawn at an angle, rather then vertically or horizontally.

The neck is formed with a wider section 34, which extends around the neck, and a threaded section 38 for receiving a cap or a similar closure. The threaded section 38 is located at the top of the neck 26, and the wider section 34 is located between the recess and the threaded section 38.

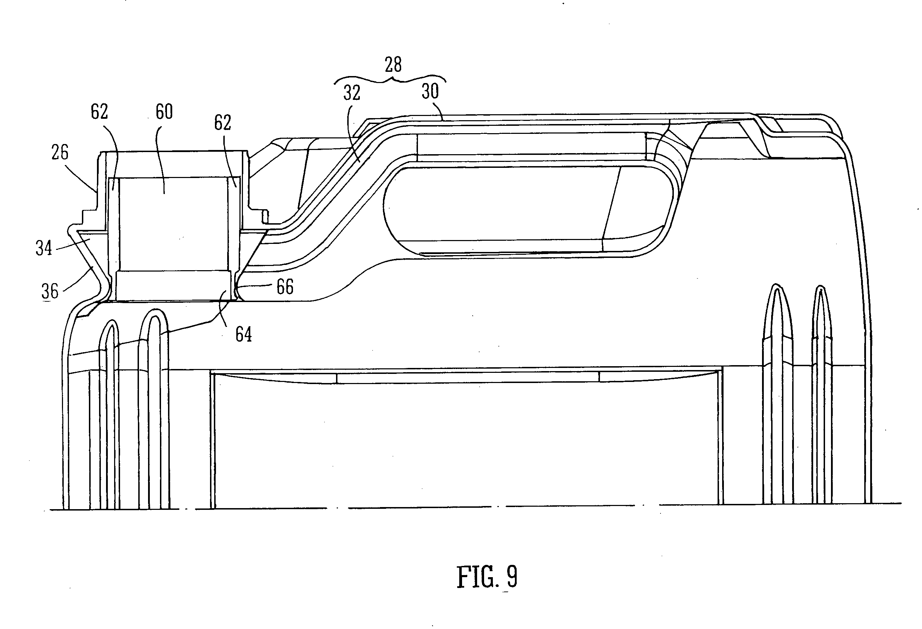

However, in contrast to the prior art (as shown in WO 2007/048173) where the wider section is formed with a generally rectangular cross-section, the wider section 34 of the container 10 of the invention is tapered. In the specific embodiment shown, it has a cross-section in the shape of a right-angled triangle. Further, the hypotenuse 36 of the right-angled triangle is arranged such that the angle between the hypotenuse 36 and the vertical is substantially the same as the angle between the recess side walls 20, 22 and the vertical. The wider section 34 can be considered as a body of revolution, formed when the right-angled triangle is rotated around the central axis of the neck. At the back of the neck, the wider section 34 is in communication with the inside of the handle (as best shown in Figure 9).

As mentioned above, this part of the neck is shaped in a similar manner to a Belleville washer, and it is believed that this shape allows the neck to flex when subjected to shock loads.

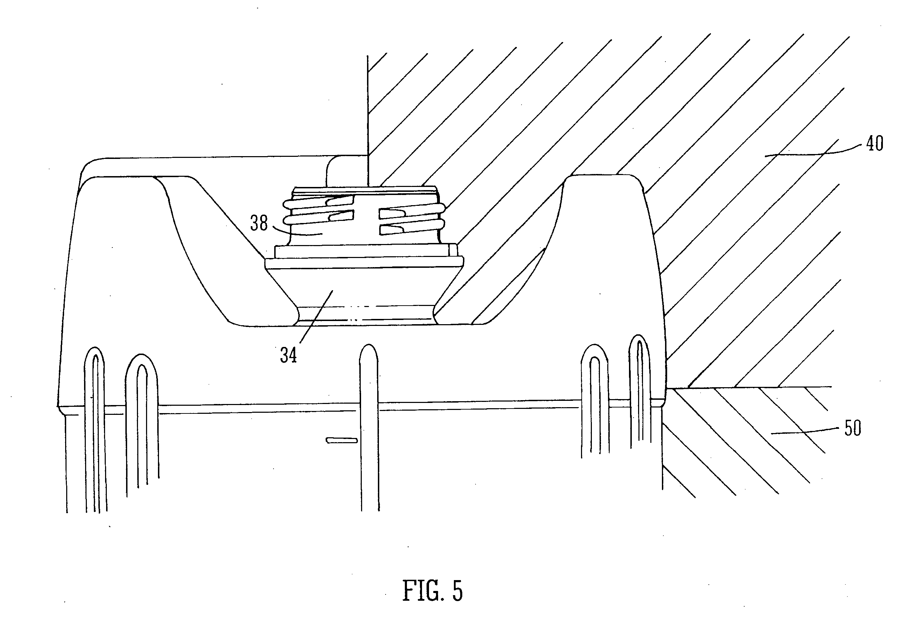

With this arrangement, one surface of the upper mould parts can form a recess side wall 20 or 22, and a parallel opposite surface can form the hypotenuse 36 of the wider section 34, as shown in Figure 5. Reference numeral 40 denotes one of the upper mould parts, and a side mould part is indicated by the reference numeral 50.

Once the container 10 has been moulded, the side mould parts 50 are moved away from the container in a horizontal direction (as indicated by arrow B) and the upper mould parts 40 are moved horizontally and upwardly, obliquely away from the container (as indicated by arrow A). The angle at which the upper mould parts 40 move matches the angle of the recess side walls 20, 22, so that the upper mould parts effectively slide along the recess side walls.

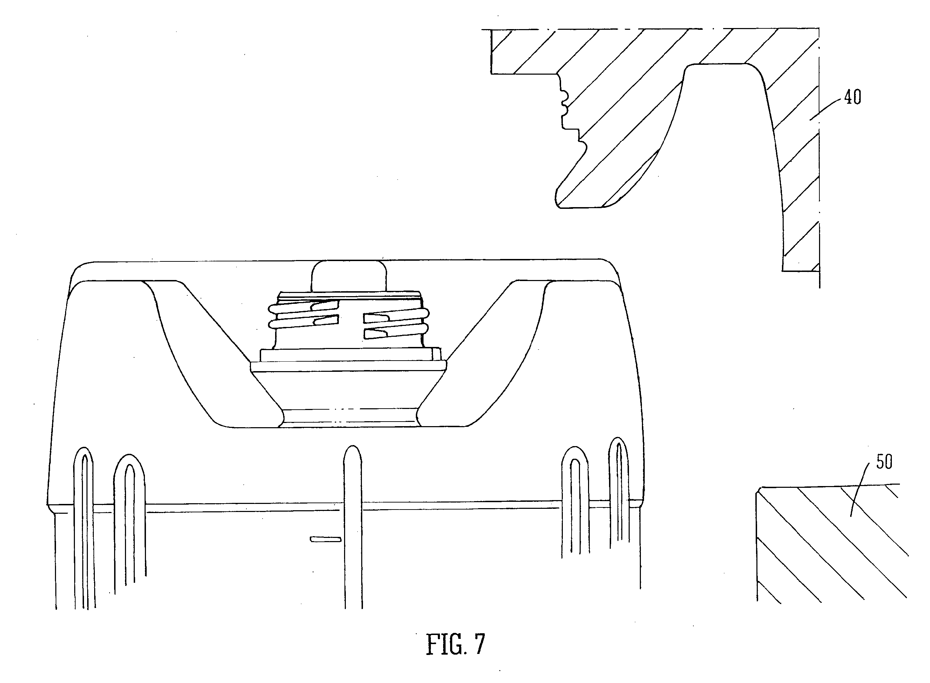

When the upper mould parts have been completely withdrawn from the gap formed by the wider section 34 and the recess side walls 20, 22, as shown in Figure 7, they can then be moved sideways.

Thus, it will be seen that the tapered shape of the wider section allows the mould parts to be withdrawn from the moulded container without damaging any part of the container, and in particular without damaging the wider section 34.

Even if there is some interference between the mould parts and the wider section (for example, because the taper of the wider section does not exactly match the slope of the recess side walls), the upper mould parts can still be withdrawn without damaging the container. At the stage in the process when the mould parts are removed, the container is still quite hot, and thus the plastic forming the container is still fairly flexible. This flexibility allows the container to deform slightly as the mould parts are withdrawn, a process known in the art as "bumping out".

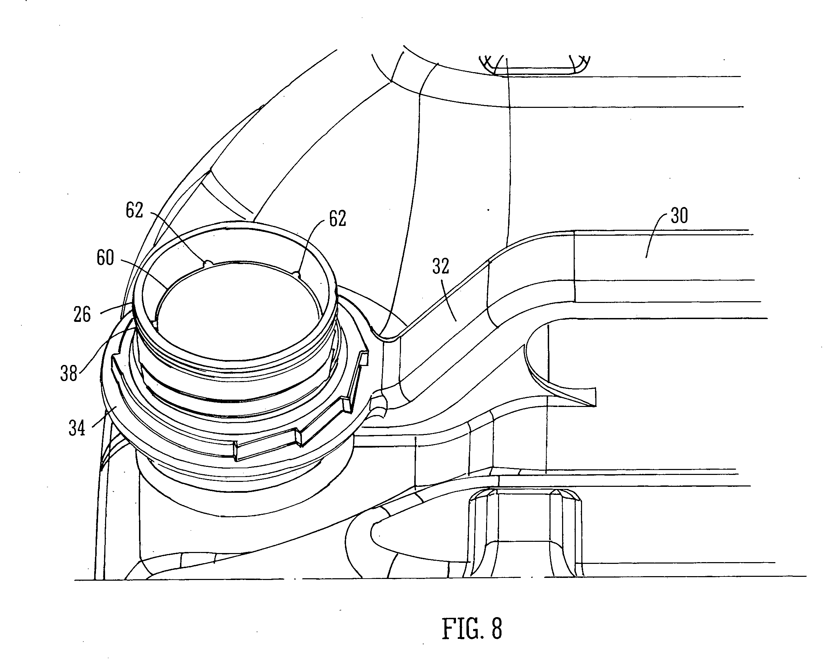

Furthermore, while the container is hot and fresh from the mould, an insert 60 is introduced into the neck through the mouth. As shown in Figures 8 and 9, this insert is in the form of a generally cylindrical sleeve. Circumferentially spaced around the outer periphery of the sleeve are a plurality of locating lugs 62 (six in the present embodiment), which project radially outward a short distance from the outer periphery of the sleeve. The sleeve and the lugs are sized such that the locating lugs rest against the inner surface of the neck, and it will be noted that the plane of the cross-section in Figure 9 passes through two of these lugs 62.

When in place, the insert divides the neck of the container into two sections; an inner section (defined by the inner diameter of the sleeve) for liquid and an outer annular section for air. The annular section is defined between the inner wall of the neck and the outer periphery of the sleeve, and the radial dimension of the annular section is generally equal to the radial extent of the locating lugs 62 (see Figure 8). The annular section is in communication with the wider portion 34, and thus with the hollow handle.

The insert is introduced into the neck as an interference fit. Specifically, a circumferential groove 64 on the lower part of the insert is shaped to fit with the inner wall of the neck, and in particular to accommodate the angled part 66 where the wider section 34 of the neck joins the upper wall 18. Subsequently, as the container cools, it shrinks slightly (as a result of thermal contraction), and this contraction serves to retain the insert 60 in position even more firmly.

When liquid is poured from the container, it is constrained to flow through the inner section, and cannot enter the outer annular section (as is clear from Figure 9). Meanwhile, air flows into the container through the annular section, into the wider portion 34, and then into the hollow handle. Thus, the air can flow into the container to replace the liquid, and this provides a more reliable "anti-glug" feature for the container.

As well as providing the "anti-glug" feature, the provision of the insert in the neck where it joins the upper wall of the container provides structural reinforcement at this vulnerable part of the container, and thus further improves the resistance to shock loads. As can be seen from Figures 8 and 9, the insert is dimensioned such that, when it is installed, its upper end is positioned a little way below the upper end of the neck. This means that impact loads applied to the top of the neck (such as would occur if the container were to be dropped onto its neck) are not transmitted directly to the insert, and so the insert is less likely to be dislodged by an impact.

By positioning the neck 26 in the recess and keeping the top face of the handle 28 level with the top face of the container itself, the containers can be stacked without compression damage to the handle and neck when a pallet of containers is stacked onto another pallet. Further, the area at the front of the recess from which the neck projects upwardly is located a small distance back from the front of the recess, and this distance is such that the frontmost part of the wider section does not project beyond the front wall. As a result, no part of the container projects beyond its own footprint, and containers can be placed next to each other without a container interfering with the container next to it. Further, the containers can be packed tightly, which can reduce transport costs.

The container has been described in the context of a single specific shape for the wider section of the neck; however, the skilled person will appreciate that the shape of this could be varied without departing from the scope of the appended claims.

## Claims

1. A container (10) for liquids, comprising side walls (12), front and rear walls (16, 14), a base, and an upper wall (18);
wherein the upper wall (18) includes a recess with recess side walls (20, 22) and a recess rear wall (24), the recess side walls (20, 22) being formed at an angle to the container side walls (12), and a generally cylindrical neck (26) projects upwardly from the front of the recess;
wherein the neck (26) is provided with a wider section (34) near the base of the recess, shaped such that it is wider at its top part than at its bottom part,
**characterised in that** said wider section extends around the neck (26) as a body of revolution, which allows the neck (26) to deform resiliently when subjected to shock loads.

2. A container as claimed in claim 1, wherein the wider section (34) has a cross-section in the general form of a right-angled triangle, the hypotenuse (36) of the right-angled triangle extending at substantially the same angle to the container side wall (12) as the recess side wall (20, 22) does.

3. A container as claimed in claim 1 or claim 2, wherein the area at the front of the recess from which the neck (26) projects upwardly is located rearwardly from the front of the recess, so that the frontmost part of the wider section (34) is located rearward of the front wall (16) and does not project beyond the front wall (16).

4. A container as claimed in any preceding claim, wherein the neck (26) consists of the wider section (34) and a threaded section (38) extending upwardly from the wider section (34), for receiving a cap.

5. A container as claimed in any preceding claim, wherein an insert (60) is provided in the neck (26), to divide the neck into a central passage for liquid and an outer passage for air, the outer passage being in communication with the wider section.

6. A method of forming a container as claimed in any of claims 1 to 4, comprising the steps of:
providing a mould (40, 50) in which the container (10) is to be blow moulded, the mould having separately movable parts (40) for forming the upper part of the container;
providing a parison between the parts of the mould (40, 50);
closing the mould (40, 50) about the parison;
inflating the parison to form the container (10); and
opening the mould (40, 50);
wherein, as the mould is opened, the separately movable parts (40) are moved in a direction corresponding to the angle of the recess side wall (20, 22).

7. A method as claimed in claim 6, comprising the additional step of inserting an insert (60) into the neck (26) of the container (10) with an interference fit immediately after moulding, while the material of the container (10) is still hot, such that thermal shrinkage of the container (10) as it cools serves to firmly hold the insert (60) in place.

## Patentansprüche

1. Behälter (10) für Flüssigkeiten, umfassend Seitenwände (12), Vorder- und Hinterwände (16, 14), eine Basis und eine obere Wand (18);
wobei die obere Wand (18) eine Vertiefung mit Vertiefungsseitenwänden (20, 22) und einer Vertiefungsrückwand (24) aufweist, wobei die Vertiefungsseitenwände (20, 22) in einem Winkel zu den Behälterseitenwänden (12) stehen und ein im Wesentlichen zylindrischer Hals (26) vorn aus der Vertiefung nach oben herausragt;
wobei der Hals (26) einen breiteren Abschnitt (34) nahe der Basis der Vertiefung aufweist, der derart geformt ist, dass er an seinem oberen Abschnitt breiter ist als an seinem unteren Abschnitt,
**dadurch gekennzeichnet, dass** der breitere Abschnitt sich als Rotationskörper um den Hals (26) herum erstreckt, wodurch es dem Hals (26) ermöglicht wird sich elastisch zu verformen, wenn er Stoßkräften ausgesetzt wird.

2. Behälter nach Anspruch 1, wobei der breitere Abschnitt (34) einen Querschnitt hat, der im Wesentlichen der Form eines rechtwinkligen Dreiecks entspricht, wobei die Hypotenuse (36) des rechtwinkligen Dreiecks sich im Wesentlichen im selben Winkel zur Behälterseitenwand (12) erstreckt wie die Vertiefungsseitenwand (20, 22).

3. Behälter nach Anspruch 1 oder 2, wobei der vordere Bereich der Vertiefung, aus der der Hals (26) sich nach oben erstreckt, derart hinter die Vorderkante der Vertiefung zurückversetzt ist, dass die Vorderkante des breiteren Abschnitts (34) hinter der Vorderwand (16) zurücksteht und nicht über die Vorderwand (16) hinausragt.

4. Behälter nach einem der vorhergehenden Ansprüche, wobei der Hals (26) aus dem breiteren Abschnitt (34) und einem Gewindeabschnitt (38) besteht, der nach oben aus dem breiteren Abschnitt (34) herausragt, um einen Deckel aufzunehmen.

5. Behälter nach einem der vorhergehenden Ansprüche, wobei ein Einsatz (60) im Hals (26) bereitgestellt ist, um den Hals in einen mittig angeordneten Durchlass für Flüssigkeit und einen äußeren Durchlass für Luft zu teilen, wobei der äußere Durchlass mit dem breiteren Abschnitt in Verbindung steht.

6. Verfahren zum Herstellen eines Behälters nach einem der Ansprüche 1 bis 4, welches die folgenden Schritte umfasst:
Bereitstellen einer Form (40, 50), in der der Behälter (10) unter Einsatz von Blasformen ausgeformt werden soll, wobei die Form getrennt bewegliche Teile (40) hat, um den oberen Teil des Behälters zu formen;
Bereitstellen eines Vorformlings zwischen den Teilen der Form (40, 50);
Schließen der Form (40, 50) um den Vorformling;
Aufblasen des Vorformlings, um den Behälter (10) auszuformen; und
Öffnen der Form (40, 50);
wobei beim Öffnen der Form die getrennt beweglichen Teile (40) in einer Richtung bewegt werden, die dem Winkel der Vertiefungsseitenwand (20, 22) entspricht.

7. Verfahren nach Anspruch 6, welches den weiteren Schritt des Einsetzens eines Einsatzes (60) in den Hals (26) des Behälters (10) durch Presseinpassen direkt nach dem Formen umfasst, während das Material des Behälters (10) noch immer heiß ist, sodass das thermische Schrumpfen des Behälters (10) beim Abkühlen dazu beiträgt, den Einsatz (60) in Einbaulage zu halten.

## Revendications

1. Un récipient (10) pour liquides, comprenant des parois latérales (12), des parois avant et arrière (16, 14), une base, et une paroi supérieure (18) ;
dans lequel la paroi supérieure (18) comporte un renfoncement avec des parois latérales du renfoncement (20, 22) ainsi qu'une paroi arrière du renfoncement (24), les parois latérales du renfoncement (20, 22) étant formées avec une inclinaison par rapport aux parois latérales du récipient (12), et un col généralement cylindrique (26) fait saillie verticalement de l'avant du renfoncement ;
dans lequel le col (26) est doté d'une section plus large (34) près de la base du renfoncement, avec une forme telle qu'il est plus large au niveau de sa partie supérieure qu'au niveau de sa partie inférieure,
**caractérisé en ce que** ladite section plus large s'étend autour du col (26) en tant que corps de révolution, ce qui permet au col (26) de se déformer de manière élastique lorsqu'il est soumis à des charges d'impact.

2. Un récipient selon la revendication 1, dans lequel la section plus large (34) a une section transversale avec la forme générale d'un triangle rectangle, l'hypoténuse (36) du triangle rectangle s'étendant avec un angle par rapport à la paroi latérale du récipient (12) sensiblement égal à l'angle que forme cette paroi avec la paroi latérale du renfoncement (20, 22).

3. Un récipient selon la revendication 1 ou la revendication 2, dans lequel l'espace devant le renfoncement et depuis lequel le col (26) fait saillie verticalement est situé en arrière par rapport à l'avant du renfoncement, de manière à ce que la partie la plus en avant de la section plus large (34) soit située en arrière par rapport à la paroi avant (16) et ne fasse pas saillie au-delà de la paroi avant (16).

4. Un récipient selon toute revendication précédente, dans lequel le col (26) est constitué de la section plus large (34) et d'une section filetée (38) s'étendant verticalement à partir de la section plus large (34), afin de recevoir un bouchon.

5. Un récipient selon toute revendication précédente, dans lequel un tube séparateur (60) est inséré dans le col (26) pour diviser le col en un passage central pour le liquide et un passage extérieur pour l'air, le passage extérieur communiquant avec la section plus large.

6. Une méthode pour former un récipient selon une quelconque des revendications 1 à 4, comprenant les étapes suivantes :
fournir un moule (40, 50) dans lequel le récipient (10) est destiné à être moulé par soufflage, le moule ayant des parties séparément mobiles (40) pour former la partie supérieure du récipient ;
fournir une paraison entre les parties du moule (40, 50) ;
refermer le moule (40, 50) autour de la paraison ;
gonfler la paraison pour former le récipient (10) ; et
ouvrir le moule (40, 50) ;
dans laquelle, dès lors que le moule est ouvert, les parties séparément mobiles (40) sont déplacées dans une direction correspondant à l'angle de la paroi latérale du renfoncement (20, 22).

7. Une méthode selon la revendication 6, comprenant l'étape supplémentaire d'insérer un tube séparateur (60) dans le col (26) du récipient (10) avec une obstruction installée immédiatement après le moulage, pendant que le matériau du récipient (10) est encore chaud, de manière à ce que le retrait thermique du récipient (10) lorsqu'il refroidit serve à maintenir fermement le tube séparateur (60) en place.
